# EUROPEAN PATENT SPECIFICATION

(11) **EP 0 594 304 B1**
(45) Date of publication and mention of the grant of the patent: **07.06.2000**
(21) Application number: 93307467.6
(22) Date of filing: 21.09.1993
(51) Int. Cl.: G06F 9/46

(54) **Opcode specific compression for window system**
Opcode abhängige Komprimierung für ein Window-System.
Opcode spécifique pour compression pour un système de fenêtre

(30) Priority: 20.10.1992 US 963795
(43) Date of publication of application: 27.04.1994
(73) Proprietor: NETWORK COMPUTING DEVICES, INC., Mountain View, CA 94043 (US)
(72) Inventor: Paul, Byron G., Portland, Oregon 97219-6210 (US); Smith, Carolyn J., Portland, Oregon 97229 (US); Brown, Alfred T., West Linn, Oregon 97068 (US)
(74) Representative: Wombwell, Francis

(56) References cited:
- EP-A- 0 536 801
- GB-A- 2 020 520
- GB-A- 2 240 230
- PATENT ABSTRACTS OF JAPAN vol. 015, no. 368 (P-1253) 17 September 1991 & JP-A-03 144 780 (SHARP CORP) 20 June 1991
- R.GONZALEZ-P.WINTZ 'digital image processing' 1987 , ADDISON-WESLEY , READING, MASSACHUSETTS,USA * page 260, left column, line 5 - line 10 * * page 269, right column, line 8 - page 272, left column, line 3 *

## Description

### Background of the Invention

The current invention relates to data compression, and more particularly to opcode specific compression for Window Systems that increases throughput and performance of window applications when commonly used opcodes and opcode sequences are compressed.

A consortium sponsored by the Massachusetts Institute of Technology (MIT) in Cambridge, Massachusetts, United States of America proposed the X Window System for graphics systems that allows separate applications to be run, apparently concurrently, as described in "X Window System -- CLibrary and Protocol Reference" by Robert W. Scheifler et al and published by Digital Press. Each application is run on a computer and displayed on a graphics display within one or more "windows" on the display. The various applications, or clients, are coupled to a display server via a bi-directional data path, such as a local area network or a remote communications link including telephone lines. The display server formats requests from the clients for appropriate display within the appropriate window(s). The display server in return provides X replies, events and errors back to the clients. The requests from the clients include a connection request, asking for access to the display, and data requests for transferring data and text to the display server. The communication between the display server and clients is via an X-wire protocol. The requests in the X Window System have multiple bytes including a request header and a variable number of subsequent bytes. The X-wire protocol is not compact and is not designed for high efficiency data transmission. The X-wire data may be compressed and decompressed by remote communication devices, such as modems, but interactive communication, compression, and error correction cause latency in the turnaround, i.e., slows down the communication. Thus, especially in low bandwidth channels such as remote communications links, the communication between the display server and clients may be quite slow. Therefore some form of data compression prior to the communication link is desired to speed up the interaction between the client and the display server.

Previous compression techniques applied to X Window Systems include the use of a generic compression algorithm, such as the UNIX LZW algorithm described by Terry A. Welch in "A Technique for High Performance Data Compression", IEEE Computer, Vol. 17 No. 6, June 1984, pp. 8-19. Another algorithm that has been used, either separately or in conjunction with the generic compression algorithm, is a delta encoding or difference record encoding algorithm as described in Section 7.0 of "X Remote and Terminal Services" by Kevin Paul Herbert in the conference proceedings of the Silicon Valley Networking Conference (SVNC) of 1991. Additional algorithms that have been proposed on the X Window consortium e-mail network include removal of unused bytes and special bit-map compression algorithms for images. All of these compression techniques help to speed up the communication between clients and the display server, but further speed enhancements are desired, especially for low bandwidth channels.

### Summary of the Invention

Accordingly the present invention provides an opcode specific compression for Window System applications that further compresses the protocol messages to enhance the performance of window applications in low bandwidth channels. At the interface between a client, or X Window application, and a display server compression may be applied either by the X Library functions or by a proxy server. The proxy server is coupled to a computer or computers on which the clients are resident, and also to a server interface via a communications link. The proxy server compresses the requests from the clients for the display interface into data packets that are transmitted to the server interface over the communications link. The server interface then decompresses and routes the data from the data packets to appropriate client data inputs of a display server. The display server processes the data for each client and provides the processed data in the appropriate "window(s)" on a display device. Replies, events and errors from the display device are likewise compressed by the server interface, transmitted over the communications link in the form of data packets to the proxy server, and decompressed and routed to the appropriate client.

Specific X-opcodes include PolySegment, PolyLine, PolyRectangle, PolyFill Rectangle and ImageText8. The above Poly opcodes include a request header followed by data pairs, each data pair having two sixteen-bit data values, or four data bytes. They are processed similarly by taking three passes through N similar pairs of data from each X request. The three passes are made to determine whether data representing display pairs within the request may be reduced from four bytes per data pair (two 16-bit data values) to two bytes per data pair (two 8-bit data values) as well as to determine the number of repeated data pairs. The first pass reviews the data "as-is." The second pass encodes the data pairs relative to a first data pair. The third pass encodes the original data pairs relative to the latest data pair. The pass that produces the greatest number of two byte data pairs and/or the most repeated data pairs is selected to process the entire X request. For the entire X request the data is then cached as it is processed, and new data pairs are compared with data pairs in the cache. In the encoded, or compressed, data an identifier byte indicates whether each of two consecutive data pairs are defined as four byte values, two byte values or the same as a prior data pair in the cache. The appropriate value for the data pair(s) follows the identifier byte when not the same as a prior data pair in the cache. Likewise the request headers for consecutive requests are compared and if the same, are compressed by setting an appropriate unused bit in the subsequent request header lead bytes.

For ImageText8 data the compression algorithm looks for identified sequences of requests with specified repeated data patterns, and reduces an identified sequence into a single compressed request. The ImageText8 processing saves a request for a limited, predetermined period of time in order to identify a request sequence. Whether an ImageText8 sequence is identified or not, the ImageText8 header also is compressed as discussed above for data pair requests by setting bits in the subsequent ImageText8 header lead bytes if a match is found.

The objects, advantages and novel features of the present invention as defined in the appended claims are apparent from the following detailed description when read in conjunction with the attached drawing.

### Brief Description of the Drawing

Fig. 1 is a block diagram plan view of an X Window System according to the present invention.
Fig. 2 is a block diagram plan view of a portion of an interface between clients and a display server for the X Window System according to the present invention.
Fig. 3 is a pictorial view of image data formats for the X Window System.
Fig. 4 is a pictorial view of an image to be displayed using the present invention.
Fig. 5 is a pictorial view of data for the image of Fig. 4 compressed according to the present invention.
Fig. 6 is a pictorial view of an ImageText8 sequence of requests for the X Window System.

### Description of the Preferred Embodiment

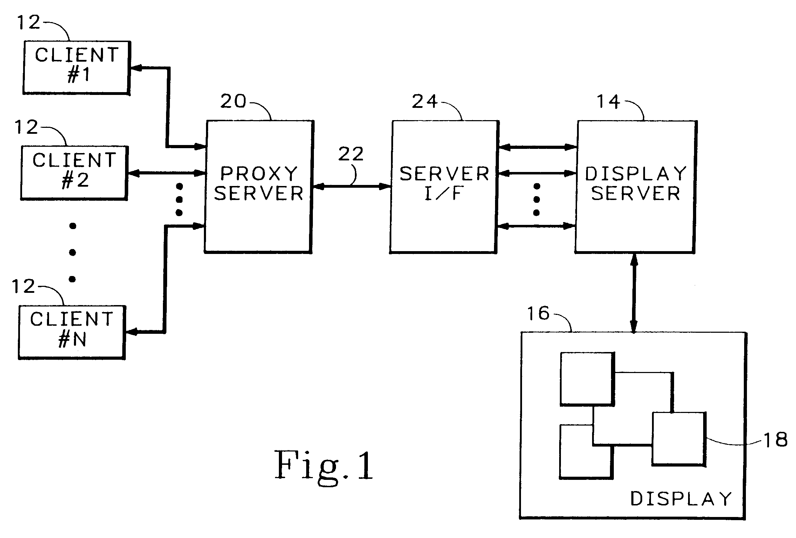

Referring now to Fig. 1 an X Window System is shown having a plurality of client applications **12** that run on one or more computers, a display system with a display server **14** and a display device **16** with a plurality of windows **18** within which the client applications are displayed. The outputs from the client applications **12** in X-wire protocol are input to a proxy server **20** or an XLibrary function within the client application. The proxy server **20** processes the inputs from the client applications **12** to produce encoded, compressed packets of data that are transmitted over a communications link **22** to a server interface **24**. The server interface **24** decodes and decompresses the packets of data from the communications link **22** to reconstruct the original X-wire protocol information from the client applications. The original X-wire protocol information is input to the display server **14** as data from each client application **12**. The display server **14** processes the data from each client application **12** for display in the appropriate window(s) **18** on the display device **16**.

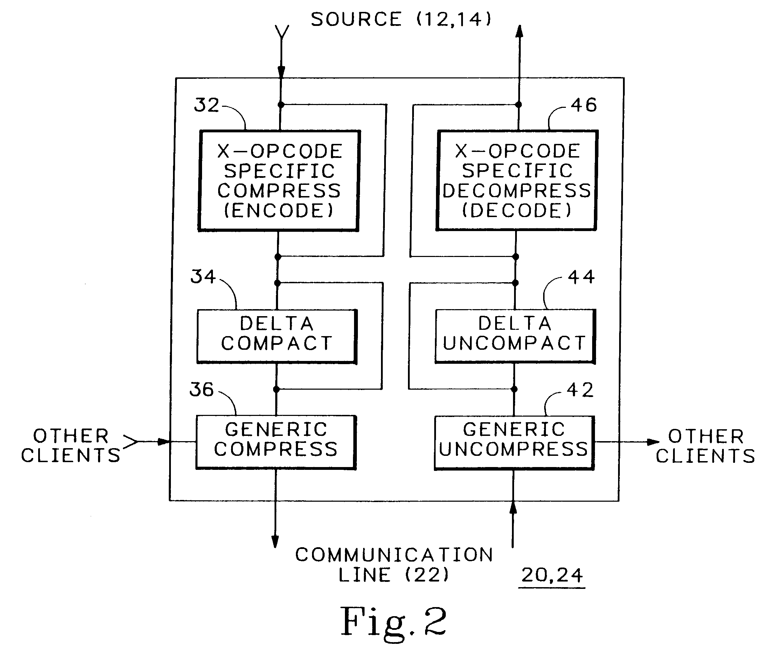

As shown in Fig. 2 the configuration of the proxy server **20** and server interface **24** are essentially identical, so only one is described in detail. X-wire protocol data streams are input initially to an X-opcode specific compression algorithm/encoder **32** where the data is compressed as described in more detail below. The initially compressed data from the X-opcode encoder **32**, or the original data if no opcode compression is applied, is input to a delta compactor algorithm **34**. The data at the input to the delta compactor algorithm **34** or the data output from the delta compactor algorithm, depending upon the length of the data, is then input to a generic compression algorithm **36** for combination with similarly compressed data from or for other client applications **12** into packets of data with a header and trailer and transmitted over the communications line **22**. The packet header includes a sequence byte that indicates the sequence number of the packet in a stream of packets and a client application identification number byte. The trailer includes two cyclic redundancy check (CRC) bytes and a unique frame byte. A byte may be added in the packet by the generic compression algorithm **36** when the source or destination of the data within the packet is switched from or to another client application.

The packet stream is received by the proxy server/server interface **20/24** from the communication line **22** and decoded. The header of each packet is cached for comparison with the next packet header in order to determine a correct sequence of packets, i.e., no missing packets. The data is routed to a generic decompression algorithm **42** and then to an appropriate delta decompaction algorithm **44** for the designated client when indicated. The resulting data stream from the generic decompaction algorithm, if no delta decompression is indicated, or from the delta decompression algorithm is input to an X-code specific decompression decoder algorithm **46** when indicated to reconstruct the original X-wire protocol for or from each of the client applications **12**.

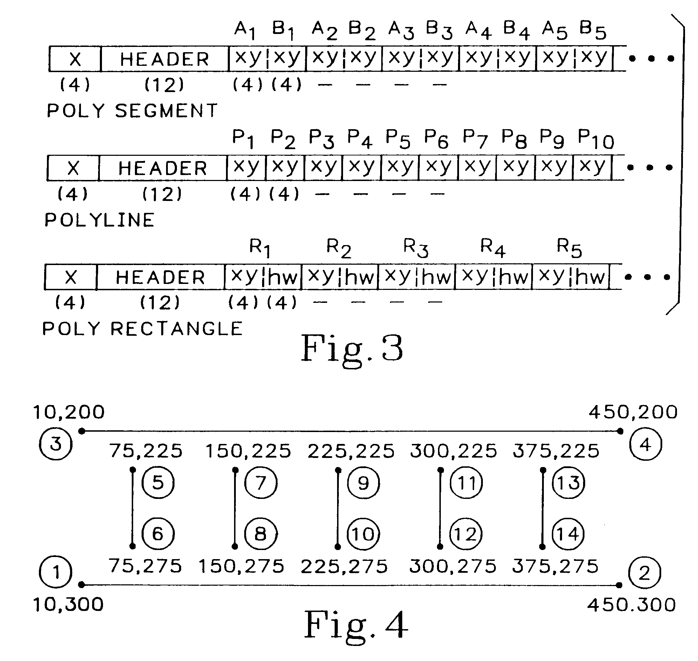

Data for images may be transmitted in the X-wire protocol as either line segments, PolySegment, contiguous lines, PolyLine, or rectangles, PolyRectangle and PolyFillRectangle. The encoding function for each of these request types is **xspecEncodePolySeg**, **xspecEncodePolyLine** or **xspecEncodePolyRect**. Corresponding functions exist for the respective request decoders. As shown in Fig. 3 a PolySegment X request from a client application **12** has a two-part request header of four plus twelve bytes followed by pairs of xy data points, each data point determining the coordinate for an end point of a line segment. The number of data point pairs for each PolySegment request is included in the header. Each coordinate for each data point is expressed as a 16-bit (two-byte) value, so the definition of a line segment requires eight bytes. A PolyLine X request has the same type of header as the PolySegment X request, except for the identification of the opcode type. Contiguous data points follow the header, expressed in xy coordinates, with the prior point being the start point for a line segment ending with the present point. Finally a PolyRectangle X request is very similar to the PolySegment X request except that, instead of two data points being grouped together, a start point in xy coordinates and an area extent value in terms of a height and width (hw) of the rectangle form the data point pair.

The encoding of a PolySegment X request is used as an example of the compression/encoding of the present invention. An image, such as that shown in Fig. 4, has a plurality of line segments to be displayed. This image is readily displayed as a PolySegment, with the first line segment pair of data points being points (**1**), (**2**). After the header the data points are grouped in pairs, as shown in Fig. 3, moving numerically from point (**1**) to point (**14**). The following **Table I** provides under column **A** the coordinate values for each data point of the image.

**TABLE I**

| Data Point Number | A "AS-IS" | B Rel to First | C Rel to Latest |
|---|---|---|---|
| 1 | 10, 300 | 10, 300 | 10, 300 |
| 2 | 450, 300 | 440, 0 | 440, 0 |
| 3 | 10, 200 | 0, -100 | -440, -100 |
| 4 | 450, 200 | 440, -100 | 440, 0 |
| 5 | 75, 225 | 65, -75 | -375, 25 |
| 6 | 75, 275 | 65, -25 | 0, 50 |
| 7 | 150, 225 | 140, -75 | 75, -50 |
| 8 | 150, 275 | 140, -25 | 0, 50 |
| 9 | 225, 225 | 215, -75 | 75, -50 |
| 10 | 225, 275 | 215, -25 | 0, 50 |
| 11 | 300, 225 | 290, -75 | 75, -50 |
| 12 | 300, 275 | 290, -25 | 0, 50 |
| 13 | 375, 225 | 365, -75 | 75, -50 |
| 14 | 375, 275 | 365, -25 | 0, 50 |

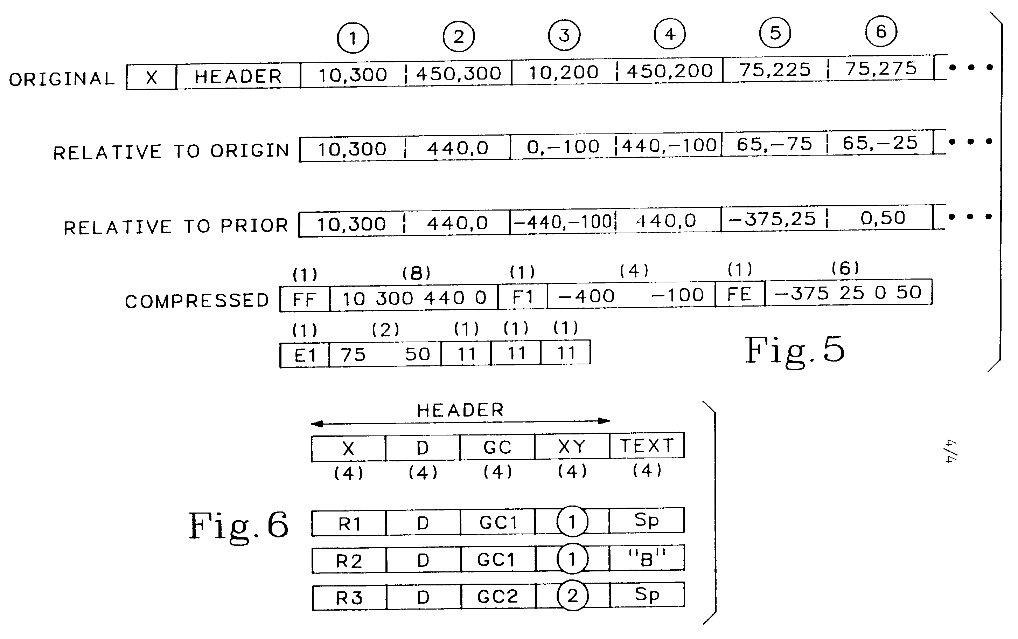

The first step of the encoding is to process the first N data points in the PolySegment X request. The actual number of data points in the request may be more or less than N. If less than N, all of the data points are examined. As shown in Fig. 5 part of the first step includes a first pass in which the data points are tested "as is" to see how many may be reduced to a single byte, i.e., have a value less than decimal 256. Then in a second pass all of the data points are relativized with respect to a first data point, and the number of data points that now may be reduced to a single byte are tested, i.e., have a value in the range of + /-127. Finally in a third pass the data points are relativized with respect to the latest data point and tested to determine how many may be reduced to a single byte. Referring to **Table I** above under column A four data points may be expressed in eight-bit values, under column B three data points may be expressed in eight-bit values, and under column C nine data points may be expressed in eight-bit values. Then the number of repeated data points is determined for each pass to arrive at a figure of merit for encoding. For the fourteen data points in columns A and B there are no repeated data points. The figure of merit is 14/14 = 1. For column C there are six unique data points, so the figure of merit is 14/6 = 2.33. Based upon this analysis of the first N data points, the entire PolySegment X request is processed relativized to the latest data point since this encoding technique has the greatest number of data points that have values that may be reduced to a single byte and has the best figure of merit for repeated points.

The second step is to compress the entire request using the selected encoding technique, in this example the technique represented in column C of **Table I**. As illustrated in Fig. 5 for each pair of data points an identifier byte is established, with the first four bits indicating how to determine the value of the first data point of the pair and the last four bits indicating how to determine the value of the second data point of the pair. As the data points are received, they are placed in a Least Recently Used (LRU) replacement cache such that the most recent data point is at cache location zero. For this particular example two configurations of four bits, binary coded decimal F and binary coded decimal E, are reserved to indicate that the corresponding data point is either two 16-bit values or two 8-bit values, respectively, and the values follow the indicator byte. However if the data point is the same as a data point in the cache, then the value representing the index into the cache is used.

Applying this to the example of **Table I** the first data point has a coordinate with a value outside the range of +/-127, as does the second data point. At data point (**2**) the value of data point (**1**) is at location zero in the cache, but the values are not equal. Therefore the identifier byte for the first data point pair has a value of "FF", and is followed by the eight bytes that contain the four values for the xy coordinates of the first data point pair. Data point (**3**) is compared to locations zero and one in the cache, corresponding to data points (**2**) and (**1**) respectively. Since there is no equality with either point in the cache and the value is outside the range +/-127, "F" is inserted into the first part of the next identifier byte. However data point (**4**) has the same value as data point (**2**), which is at location one in the cache with respect to data point (**4**). Therefore the second part of the next identifier byte is "1" so that the identifier byte becomes "F1". The identifier byte is then followed by the four bytes necessary to provide the values for data point (**3**). The next pair of data points (**5)** and (**6**) have no equal values in the cache, and data point (**5**) requires sixteen bits while data point (**6**) requires only eight bits. Thus the next identifier byte becomes "FE" followed by six bytes of data values. Following the process the next pair of data points are compressed as "E1" plus the two bytes for data point (**7**). The final three pairs of data points have corresponding values in the cache, so only the identifier byte for each pair is required and each identifier byte is "11" since the equal value for each data point is at cache location one. This compresses the data for seven line segments, originally provided by 56 bytes (four bytes per point times fourteen points), to 27 bytes.

In a like manner a PolyLine X request may be encoded and compressed using consecutive pairs of the data points that mark changes in direction of a continuous line image. The same process applies to a PolyRectangle X request. However in processing the PolyRectangle X request the data point coordinate values and area extent values are encoded separately and stored in two separate caches during the compression phase so that data points are compared with data points and area extent values are compared to area extent values. The first nibble of the identifier byte is a data coordinate nibble and the second nibble is an area extent nibble.

Further compression may be realized by caching the request header from a prior X request to determine whether there is identity between header fields in consecutive requests. If so, appropriate otherwise empty bits indicating which header fields did not change are set in the first four bytes of the header, and the corresponding fields in the remaining twelve bytes of the header are deleted.

ImageText8 is an X request for displaying text image characters. There are certain common sequences that occur in writing characters to a display. One such sequence is a triad of X requests for writing a next character on a line of displayed text as shown in Fig. 6. The first X request blanks the cursor on the display by providing a space character, the second request writes the desired character into the same location on the display, and the third request writes the cursor as a space with a different graphics context at the next location on the display. The "D" in the ImageText8 format indicates the window (X-Window "drawable"), "GC" indicates a graphics context, "xy" indicates the location on the display, and "TEXT" is the character to be displayed at the designated location with the specific graphics context. Request one **R1** indicates that a drawable character is to be written at location (**1**) using graphics context one, the character being a "space" to delete the cursor currently at that location. Request two **R2** indicates that a drawable character "B" is to be written at the same location (**1**) using the same graphics context. Finally request three **R3** indicates that a drawable character "space" is to be written at the next location (**2**) using graphics context two, such as a reverse display, to produce the cursor. A state machine caches the first request **R1** for a predetermined period of time and compares subsequent requests with stored sequences that start with the first request **R1**. In this situation when a corresponding second request **R2** is found, it also is cached for a predetermined period of time to look for the third request **R3**. If the three requests occur within the predetermined periods of time, then a sequence is recognized and the state machine outputs a condensed request representing the entire sequence. In this manner an ImageText8 sequence of three requests that ordinarily requires 60 bytes of data may be reduced to a single compressed data byte plus request header. Again further reduction may be achieved by caching the prior request header and reducing the number of bytes in the header from sixteen to four bytes when the types of requests are the same. This may be done by encoding the ImageText8 "xy" as a delta from the previous, condensed request's absolute "xy." Then when the successive condensed requests' header information are compared, they have the same window ("D"), graphic context ("GC") and coordinate ("xy" which is now just the change in position from the previous request). The deltas are constant for a line of text incrementally displayed in the window.

Although the delta compactor **34** may be used to reduce the size of the condensed request, further improvement results from noting that the "request length" in the protocol header is redundant for ImageText8 since the "length of string" byte is used to compute it. By using high-order bits in the "length of string" as bit flags indicating condensation, the condensed request may be reduced to three bytes. In this case limiting the actual length value to a few low-order bits is acceptable since long text strings are not the ones undergoing request sequence compaction.

Thus the present invention provides an opcode specific compression for Window Systems by selecting an appropriate encoding technique, encoding the opcode according to the selected encoding technique, and further compressing the encoded opcode according to delta compactors and generic compressors to form data packets for transmission between client applications on one or more computers and windows on a display.

## Claims

1. A method of encoding a request from a client application to a display server, the request being of the type having a multi-byte header and a plurality of two-byte data values with pairs of data values representing data points according to a specific protocol, characterised by:
selecting an encoding technique based upon a selected number of data points of the request; and
encoding the request according to the selected encoding technique.

2. A method as recited in claim 1 wherein the selecting step comprises the steps of:
reducing the data points to relative form;
testing the relative data points for 8-bit reduction;
checking the number of data points that are repeated to determine a figure of merit; and
evaluating the results of the reducing, testing and checking steps to select the encoding technique.

3. A method as recited in claim 2 wherein the reducing step comprises the step of relativizing the data points to a first data point.

4. A method as recited in claim 2 wherein the reducing step comprises the step of relativizing the data points to a latest data point.

5. A method as recited in claim 1 wherein the selecting step comprises the steps of:
reducing the selected number of data points to a first relative form by relativizing the data points to a first data point;
testing the data points in the first relative form for 8-bit reduction;
checking for repeated points for the data points in the first relative form; and
evaluating the results of the reducing, testing and checking steps to determine whether to use the first relative form for the encoding step.

6. The method as recited in claim 5 wherein the selecting step further comprises the steps of:
repeating the reducing, testing, checking and evaluating steps with the data points reduced to a second relative form by relativizing the data points to a latest data point to determine whether to use the second relative form for the encoding step; and
using the data points without reduction for the encoding step if neither the first nor second relative forms are usable.

7. The method as recited in claim 1 wherein the encoding step comprises the steps of:
building an identifier byte of two nibbles for each pair of data points, each nibble having a value that indicates whether the corresponding data point is a 16-bit value, an 8-bit value or a pointer into a least recently used replacement cache;
updating the cache for each data point; and
adding the appropriate 16-bit or 8-bit value for the pair of data points after the identifier byte where the data points are not a cached data point.

8. The method as recited in claim 7 wherein the building step comprises the steps of:
placing an "F" in the appropriate nibble when the data point is a 16-point value;
placing an "E" in the appropriate nibble when the data point is an 8-bit value; and
placing a numeral equal to a pointer into the cache indicating the repeated data value when the data point is a repeated data value.

9. An apparatus for encoding specific opcodes for an X Window System of the type having a plurality of client applications (**12**) and a display server (**14**) with a display device (**16**) that displays the client applications in windows (**18**), and a communications link (**22**) coupled between the client applications and the display server, characterised by:
a proxy server (**20**) coupled between the client applications and the communications link to encode information from the client applications for transmission over the communications link to the display server and to decode information received from the display server over the communications link; and
a server interface (**24**) coupled between the display server and the communications link to encode information from the display server for transmission over the communications link to the client applications and to decode information received from the client applications over the communications link;
the proxy server and the server interface each including an opcode specific encoder (**32**) for compressing the information for transmission over the communications link as well as delta compaction (**34**) and generic compressors (**36**) to produce compressed data packets representing the information during transmission, and each including an opcode specific decoder (**46**) for decompressing the compressed data packets received from the communication link as well as delta decompaction (**42**) and generic decompressors (**42**) to reproduce the information.

10. An apparatus as recited in claim 9 wherein the proxy server opcode specific encoder comprises:
means for selecting an encoding technique based upon the information; and
means for encoding the information into intermediate data packets based upon the selected encoding technique, the intermediate data packets being combined with other intermediate data packets by the delta compactor and generic compressor to produce the compressed data packets.

11. An apparatus as recited in claim 10 wherein the proxy server opcode specific encoder further comprises:
means for identifying specific sequences of information; and
means for encoding the specific sequences of information into a second intermediate data packet according to the identified specific sequence, the second intermediate data packet being combined with other intermediate data packets by the delta compactor and generic compressor to produce the compressed data packets.

12. An apparatus as recited in claim 9 wherein the proxy server opcode specific encoder comprises:
means for identifying specific sequences of information; and
means for encoding the specific sequences of information into an intermediate data packet according to the identified specific sequence, the intermediate data packet being combined with other intermediate data packets by the delta compactor and generic compressor to produce the compressed data packets.

## Patentansprüche

1. Ein Verfahren zum Codieren einer Anforderung aus einer Client-Anwendung an einen Anzeige-Server, wobei die Anforderung von einer Art ist, die einen Mehr-Byte-Kopfteil und eine Mehrzahl von Zwei-Byte-Datenwerten aufweist, wobei die Paare von Datenwerten Datenpunkte repräsentieren, gemäß einem speziellen Protokoll, gekennzeichnet durch:
Auswählen einer Codierungstechnik auf der Grundlage einer ausgewählten Anzahl von Datenpunkten der Anforderung; und
Codieren der Anforderung gemäß der ausgewählten Codierungstechnik.

2. Ein Verfahren nach Anspruch 1, wobei der Auswahlschritt die Schritte umfaßt:
Reduzieren der Datenpunkte in eine Relativform;
Testen der Relativdatenpunkte für eine 8-Bit-Reduktion;
Überprüfen der Anzahl von Datenpunkten, die wiederholt werden, um eine Effektivitätszahl zu bestimmen; und
Bewerten der Ergebnisse des Reduktions-, Test- und Überprüfungsschritts, um die Codierungstechnik auszuwählen.

3. Ein Verfahren nach Anspruch 2, wobei der Reduktionsschritt den Schritt des Relativierens der Datenpunkte in bezug auf einen ersten Datenpunkt umfaßt.

4. Ein Verfahren nach Anspruch 2, wobei der Reduktionsschritt den Schritt des Relativierens der Datenpunkte in bezug auf jeweils einen letzten Datenpunkt umfaßt.

5. Ein Verfahren nach Anspruch 1, wobei der Auswahlschritt die Schritte umfaßt:
Reduzieren der ausgewählten Anzahl von Datenpunkten auf eine erste Relativform, indem die Datenpunkte gegenüber einem ersten Datenpunkt relativiert werden;
Testen der Datenpunkte in der ersten Relativform für eine 8-Bit-Reduktion;
Überprüfen hinsichtlich sich wiederholender Punkte bei den Datenpunkten in der ersten Relativform; und
Bewerten der Ergebnisse des Reduktions-, Test- und Überprüfungsschritts um festzustellen, ob die erste Relativform für den Codierschritt verwendet werden soll.

6. Das Verfahren nach Anspruch 5, wobei der Auswahlschritt ferner die Schritte umfaßt:
Wiederholen des Reduktions-, Test-, Überprüfungs- und Bewertungsschritts mit den Datenpunkten, die auf eine zweite Relativform reduziert wurden, indem die Datenpunkte gegenüber jeweils einem letzten Datenpunkt relativiert wurden, um festzustellen, ob die zweite Relativform für den Codierschritt verwendet werden soll; und
Verwenden der Datenpunkte ohne Reduktion für den Codierschritt, wenn weder die erste noch die zweite Relativform verwendbar sind.

7. Das Verfahren nach Anspruch 1, wobei der Codierschritt die Schritte umfaßt:
Aufbauen eines Identifizierbytes von zwei Tetraden für jedes Paar von Datenpunkten, wobei jede Tetrade einen Wert aufweist, der anzeigt, ob der zugehörige Datenpunkt ein 16-Bit-Wert, ein 8-Bit-Wert oder ein Zeiger in einen AmLängsten-Unbenutzt-Ersetzungs-Cache ist;
Aktualisierung des Cache für jeden Datenpunkt; und
Hinzufügen des geeigneten 16-Bit- oder 8-Bit-Werts für das Paar von Datenpunkten nach dem Identifiziererbyte, wenn die Datenpunkte kein cache-gespeicherter Datenpunkt sind.

8. Das Verfahren nach Anspruch 7, wobei der Aufbauschritt die Schritte umfaßt:
Anordnen eines "F" in der zugehörigen Tetrade, wenn der Datenpunkt ein 16-Bit-Wert ist;
Anordnen eines "E" in der zugehörigen Tetrade, wenn der Datenpunkt ein 8-Bit-Wert ist; und
Anordnen einer Nummer, die gleich einem Zeiger in den Cache ist, um einen wiederholten Datenwert anzuzeigen, wenn der Datenpunkt ein wiederholter Datenwert ist.

9. Eine Einrichtung zum Codieren spezieller Befehlscodes für ein X-Window-System einer Art, die eine Mehrzahl von Client-Anwendungen (12) und einen Anzeige-Server (14) aufweist, mit einer Anzeigeeinrichtung (16), die die Client-Anwendungen in Fenstern (18) anzeigt, und einer Kommunikationsverbindung (22), die zwischen den Client-Anwendungen und dem Anzeige-Server eingekoppelt ist, gekennzeichnet durch:
einen zwischen die Client-Anwendungen und die Kommunikationsverbindung eingekoppelten Proxy-Server (20) zum Codieren von Informationen aus den Client-Anwendungen für eine Übertragung über die Kommunikationsverbindung an den Anzeige-Server und zum Decodieren von Informationen, die aus dem Anzeige-Server über die Kommunikationsverbindung empfangen wurden; und
eine zwischen dem Anzeige-Server und der Kommunikationsverbindung eingekoppelte Server-Schnittstelle (24) zum Codieren von Informationen aus dem Anzeige-Server für eine Übertragung über die Kommunikationsverbindung an die Client-Anwendungen und zum Decodieren von Informationen, die aus den Client-Anwendungen über die Kommunikationsverbindung empfangen wurden;
wobei der Proxy-Server und die Server-Schnittstelle jeweils einen befehlscodespezifischen Codierer (32) zum Komprimieren der Informationen für eine Übertragung über die Kommunikationsverbindung sowie eine Delta-Verdichtung (34) und generische Kompressoren (36) aufweisen, um komprimierte Datenpakete zu erzeugen, die die Informationen während der Übertragung repräsentieren, und wobei sie jeweils einen befehlscodespezifischen Decodierer (46) zum Dekomprimieren der komprimierten Datenpakete, die aus der Kommunikationsverbindung empfangen wurden, sowie eine Delta-Entspannung (decompaction) (42) und generische Dekompressoren (42) aufweisen, um die Informationen zu reproduzieren.

10. Eine Einrichtung nach Anspruch 9, wobei der befehlscodespezifische Codierer des Proxy-Servers aufweist:
Mittel zum Auswählen einer Codiertechnik auf der Grundlage der Informationen; und
Mittel zum Codieren der Informationen in Zwischen-Datenpakete auf der Grundlage der ausgewählten Codiertechnik, wobei die Zwischen-Datenpakete mit anderen Zwischen-Datenpaketen durch den Delta-Verdichter (compactor) und generischen Kompressor kombiniert werden, um die komprimierten Datenpakete zu erzeugen.

11. Eine Einrichtung nach Anspruch 10, wobei der befehlscodespezifische Codierer des Proxy-Servers ferner aufweist:
Mittel zum Identifizieren spezieller Sequenzen von Informationen; und
Mittel zum Codieren der speziellen Sequenzen von Informationen in ein zweites Zwischen-Datenpaket entsprechend den identifizierten speziellen Sequenzen, wobei das zweite Zwischen-Datenpaket mit anderen Zwischen-Datenpaketen von dem Delta-Verdichter (compactor) und generischen Kompressor kombiniert wird, um die komprimierten Datenpakete zu erzeugen.

12. Eine Einrichtung nach Anspruch 9, wobei der befehlscodespezifische Codierer des Proxy-Servers aufweist:
Mittel zum Identifizieren spezieller Sequenzen von Informationen; und
Mittel zum Codieren der speziellen Sequenzen von Informationen in ein Zwischen-Datenpaket entsprechend der identifizierten speziellen Sequenz, wobei das Zwischen-Datenpaket mit anderen Zwischen-Datenpaketen von dem Delta-Verdichter und generischen Kompressor kombiniert wird, um die komprimierten Datenpakete zu erzeugen.

## Revendications

1. Procédé de codage d'une requête d'une application cliente vers un serveur d'affichage, la requête étant du type comportant un en-tête à plusieurs octets et une pluralité de valeurs de données de deux octets, des paires de valeur de données représentant des points de données selon un protocole spécifique, caractérisé par :
la sélection d'une technique de codage en se basant sur un nombre sélectionné de points de données de la requête ; et
le codage de la requête en fonction de la technique de codage sélectionnée.

2. Procédé selon la revendication 1, dans lequel l'étape de sélection comprend les étapes consistant à :
réduire les points de données en forme relative ;
tester les points de données relatifs pour une réduction de 8 bits ;
vérifier le nombre de points de données qui sont répétées pour déterminer un chiffre de mérite ; et
évaluer les résultats des étapes de réduction, test et contrôle, pour sélectionner la technique de codage.

3. Procédé selon la revendication 2, dans lequel l'étape de réduction comprend l'étape de relativisation des points de données par rapport à un premier point de données.

4. Procédé selon la revendication 2, dans lequel l'étape de réduction comprend l'étape de relativisation des points de données par rapport à un dernier point de données.

5. Procédé selon la revendication 1, dans lequel l'étape de sélection comprend les étapes consistant à :
réduire le nombre sélectionné de points de données à une première forme relative en relativisant les points de données par rapport à un premier point de données ;
tester les points de données dans la première forme relative pour une réduction de 8 bits ;
contrôler les points répétés par rapport au point de données dans la première forme relative ; et
évaluer les résultats des étapes de réduction, test et contrôle, pour déterminer s'il faut utiliser la première forme relative pour l'étape de codage.

6. Procédé selon la revendication 5, dans lequel l'étape de sélection comprend en outre les étapes consistant à :
répéter les étapes de réduction, test, contrôle et évaluation, avec les points de données réduits à une deuxième forme relative en relativisant les points de données par rapport à un dernier point de données pour déterminer s'il faut utiliser la deuxième forme relative pour l'étape de codage ; et
utiliser les points de données sans réduction pour l'étape de codage si, ni la première, ni la deuxième forme relative, n'est utilisable.

7. Procédé selon la revendication 1, dans lequel l'étape de codage comprend les étapes consistant à :
construire un octet d'identifiant de deux demi-octets pour chaque paire de points de données, chaque demi-octet ayant une valeur qui indique si le point de données correspondant est une valeur de 16 bits, une valeur de 8 bits ou un pointeur dans une antémémoire de remplacement utilisé le moins récemment ;
mettre à jour l'antémémoire pour chaque point de données ; et
ajouter la valeur appropriée de 16 bits ou 8 bits pour la paire de points de données après l'octet d'identifiant où les points de données ne sont pas un point de données mis en antémémoire.

8. Procédé selon la revendication 7, dans lequel l'étape de construction comprend les étapes consistant à :
placer un "F" dans le demi-octet approprié lorsque le point de données est une valeur de seize bits ;
placer un "E" dans le demi-octet approprié lorsque le point de données est une valeur de 8 bits ; et
placer un nombre égal à un pointeur dans l'antémémoire indiquant la valeur de données répétées lorsque le point de données est une valeur de données répétée.

9. Dispositif pour coder des opcodes spécifiques pour un système X Window du type comportant une pluralité d'applications clientes (12) et un serveur d'affichage (14) avec un dispositif d'affichage (16) qui affiche les applications clientes dans des fenêtres (18) et une liaison de communication (22) couplée entre les applications clientes et le serveur d'affichage, caractérisé par :
un serveur proxy (20) couplé entre les applications clientes et la liaison de communication pour coder des informations provenant des applications clientes pour transmission sur la liaison de communication vers le serveur d'affichage et pour décoder les informations reçues depuis le serveur d'affichage sur la liaison de communication ; et
une interface de serveur (24) couplée entre le serveur d'affichage et la liaison de communication pour coder des informations provenant du serveur d'affichage pour transmission sur la liaison de communication vers les applications clientes et pour décoder les informations reçues depuis les applications clientes sur la liaison de communication ;
le serveur proxy et l'interface de serveur comportant chacun un codeur spécifique d'opcode (32) pour compresser les informations pour transmission sur la liaison de communication ainsi qu'un compactage delta (34) et des compresseurs génériques (36) pour produire des paquets de données compressées représentant les informations pendant la transmission et comportant chacun un décodeur spécifique d'opcode (46) pour décompresser les paquets de données compressées reçus depuis la liaison de communication ainsi que la décompaction delta (42) et des décompresseurs génériques (42) pour reproduire les informations.

10. Dispositif selon la revendication 9, dans lequel le codeur spécifique d'opcode du serveur proxy comprend :
des moyens pour sélectionner une technique de codage basée sur les informations ; et
des moyens pour coder les informations en paquets de données intermédiaires en se basant sur la technique de codage sélectionnée, les paquets de données intermédiaires étant combinés avec d'autres paquets de données intermédiaires par le compacteur delta et le compresseur générique pour produire les paquets de données compressées.

11. Dispositif selon la revendication 10, dans lequel le codeur spécifique d'opcode du serveur proxy comprend en outre :
des moyens pour identifier des séquences spécifiques d'informations ; et
des moyens pour coder les séquences spécifiques d'informations en un deuxième paquet de données intermédiaires en fonction de la séquence spécifique identifiée, le deuxième paquet de données intermédiaires étant combiné avec d'autres paquets de données intermédiaires par le compacteur delta et le compresseur générique pour produire les paquets de données compressées.

12. Dispositif selon la revendication 9, dans lequel le codeur spécifique d'opcode du serveur proxy comprend :
des moyens pour identifier des séquences spécifiques d'informations ; et
des moyens pour coder les séquences spécifiques d'informations en un paquet de données intermédiaires en fonction de la séquence spécifique identifiée, le paquet de données intermédiaires étant combiné avec d'autres paquets de données intermédiaires par le compacteur delta et le compresseur générique pour produire les paquets de données compressées.
